# EUROPEAN PATENT APPLICATION

(11) **EP 4 668 036 A1**
(43) Date of publication of application: **24.12.2025**
(21) Application number: 24884537.2
(22) Date of filing: 23.10.2024
(51) Int. Cl.: G05B 19/042

(54) **METHOD, APPARATUS AND SYSTEM FOR IMPLEMENTING DISTRIBUTED SWC LINK PROCESSING**

(30) Priority: 30.10.2023 CN 202311428932
(71) Applicant: Guangzhou Automobile Group Co., Ltd., Guangzhou, Guangdong 511434 (CN)
(72) Inventor: LI, Xiaoping, Guangzhou, Guangdong 511434 (CN); YAN, Wenchi, Guangzhou, Guangdong 511434 (CN); WANG, Wei, Guangzhou, Guangdong 511434 (CN)
(74) Representative: Metida
(86) International application number: PCT/CN2024/126682
(87) International publication number: WO 2025/092533

(57) **Abstract**

The present application provides a method for implementing distributed SWC link processing, including the steps of: receiving a link registration request from a distributed SWC terminal, characterized in that the link registration request includes link information of this registration request; searching whether a target SWC identifier exists in a service list of an initiated SWC module service, and determining whether registration is successful; storing the link information of this link registration request in a vehicle-mounted memory; and according to the link information of each link registration request stored in the vehicle-mounted memory, executing a link operation corresponding to each link registration request and establishing a link relationship between each source SWC and target SWC. A corresponding device and system are further disclosed. Implementing the present application can effectively improve link efficiency between different SWCs, enhance link quality, and reduce system performance loss, thereby improving development efficiency and flexibility of complete vehicle software.

## Description

The present application claims priority to the Chinese patent application filed with the China National Intellectual Property Administration on October 30, 2023, with the application number 202311428932.1 and entitled "Method, Device, and System for Implementing Distributed Software Component (SWC) Link Processing," the entire contents of which are incorporated herein by reference.

### TECHNICAL FIELD

The present application relates to the field of automobile controller software, and particularly to a method, device, and system for implementing distributed Software Component (SWC) link processing applied in the Automobile Open System Architecture (AUTOSAR).

### BACKGROUND

With the increasing intelligence and connectivity of automobiles, the current approach is to develop software for automobile controllers based on the AUTOSAR standard. According to the specifications, the software is divided into different software components (SWCs) based on different functions, and SWCs can run on different electronic control units (ECUs). The SWC is defined by the AUTOSAR description file (ARXML) and generates code through the AUTOSAR code generation tool. The core function of an SWC is to interact with other SWCs or Basic Software (BSW) components through input/output ports, while also utilizing internal ports for internal communication.

Meanwhile, different SWCs can have mutual calling relationships; At this point, it is necessary to establish a link function between the two, so that different SWCs can achieve normal calls. Specifically, in the automobile field, a link typically refers to the signal and interface connection in AUTOSAR, used for transmitting data between different SWCs. Establishing such a link requires tasks such as defining signals, ports, and mappings.

The prior art has introduced an AUTOSAR builder tool, which provides a complete graphical user interface. The tool imports arxml of various module SWCs, parses the content within the arxml, and ultimately abstracts them into a series of models. The process of linking is essentially binding the relationships between abstract models, then converting these abstract models and their binding relationships into the data structure of arxml, and finally writing them back into the arxml, thereby achieving the actual linkage between the SWCs.

However, the existing solution of using commercial software tools to establish links between SWCs has some shortcomings:
Link efficiency is low. As automobile controller software becomes increasingly modularized, with more frequent functional iterations and changes, any modification to an SWC requires reassembly, leading to inefficient linking.

Poor link quality can easily lead to erroneous links. Due to the centralized "assembly" approach adopted, all SWCs are visible to each other, existing in a "transparent" state, lacking the constraint rules of links. Incorrect links between SWCs may be generated, thereby affecting the overall software functionality and compromising software quality.

Unnecessary system overhead is caused. Due to the real-time nature of the link, operations such as parsing, structuring, and encapsulating arxml will consume certain system overhead. Therefore, each link will cause additional consumption of system resources (primarily CPU and memory). However, the link operation is often not a one-time event; sometimes SWCA and SWCB may perform a link and then the link is canceled. If the link is changed to SWCA and SWCC, the system resources consumed by the previous link will be wasted unnecessarily, resulting in unnecessary system overhead.

These shortcomings can significantly impact the development cycle of the vehicle software.

### SUMMARY

The technical problem to be solved by the present application is to provide a method, device, and system for implementing distributed software component (SWC) link processing, which can effectively improve link efficiency between different SWCs, enhance link quality, and reduce unnecessary system performance loss, thereby improving development efficiency and flexibility of complete vehicle software.

To address the above technical problem, as one aspect of the present application, a method for implementing distributed SWC link processing is provided, applied to a vehicle including a distributed SWC server and a distributed SWC terminal, which at least includes the following steps:
initiating an SWC module service and a registry service of the distributed SWC server;
receiving a link registration request from the distributed SWC terminal, characterized in that the link registration request includes link information of this registration request, and the link information includes: a source SWC identifier and a target SWC identifier;
searching whether the target SWC identifier exists in a service list of the initiated SWC module service, determining whether registration is successful, and informing a source SWC of a registration result;
storing the link information of this link registration request in a vehicle-mounted memory; and
according to the link information of each link registration request stored in the vehicle-mounted memory, executing a link operation corresponding to each link registration request and establishing a link relationship between each source SWC and target SWC.

Specifically, initiating an SWC module service and a registry service of the distributed SWC server further includes:
initiating the SWC module service and the registry service of the distributed SWC server, and loading the service lists of all current SWC module services from the vehicle-mounted memory, as well as registry data corresponding to the registry service.

Specifically, searching whether the target SWC identifier exists in a service list of the initiated SWC module service, determining whether registration is successful, and informing a source SWC of a registration result further includes:
searching whether the target SWC identifier exists in the service list of the initiated SWC module service, if a search result indicates existence, determining that registration is successful, and storing the source SWC identifier and the target SWC identifier in a registry corresponding to the registry service, and if the search result indicates non-existence, determining that the registration fails; and
informing the source SWC of the determined registration result.

Specifically, storing the link information of this link registration request in a vehicle-mounted memory further includes:
storing the source SWC identifier and the target SWC identifier in this link registration request in the vehicle-mounted memory, recording the same as the link registration request, and informing the distributed terminal that this link has been completed.

Specifically, according to the link information of each link registration request stored in the vehicle-mounted memory, executing a link operation corresponding to each link registration request and establishing a link relationship between each source SWC and target SWC further include:
determining whether predetermined execution conditions are met, wherein the predetermined execution conditions are: the link information of each link registration request stored in the vehicle-mounted memory reaches a predetermined quantity threshold, or receiving the last link registration request exceeds a predetermined time threshold; and
when the predetermined execution conditions are met, according to the link information of each link registration request stored in the vehicle-mounted memory, executing the link operations corresponding to all link registration requests, and establishing the link relationship between each source SWC and target SWC.

The method further includes:
receiving a request for addition, modification, or deletion of SWC information pushed by the distributed terminal, and performing corresponding addition, modification, or deletion operations in the registry.

Accordingly, another aspect of the present application further provides a device for implementing distributed SWC link processing, which at least includes:
a service initiation unit configured to initiate an SWC module service and a registry service of a distributed SWC server;
a link registration request receiving unit configured to receive a link registration request from a distributed SWC terminal, characterized in that the link registration request includes link information of this registration request, and the link information includes: a source SWC identifier and a target SWC identifier;
a search processing unit configured to search whether the target SWC identifier exists in a service list of the initiated SWC module service, determine whether registration is successful, and inform a source SWC of a registration result;
a link information storage unit configured to store the link information of this link registration request in a vehicle-mounted memory; and
a link execution unit configured to, according to the link information of each link registration request stored in the vehicle-mounted memory, execute a link operation corresponding to each link registration request and establish a link relationship between each source SWC and target SWC.

Specifically, the service initiation unit further includes: a loading unit configured to, when initiating the SWC module service and the registry service of the distributed SWC server, load the service lists of all current SWC module services from the vehicle-mounted memory, as well as registry data corresponding to the registry service; and
the search processing unit further includes:
a search determination unit configured to search whether the target SWC identifier exists in the service list of the initiated SWC module service, if a search result indicates existence, determine that registration is successful, and store the source SWC identifier and the target SWC identifier in a registry corresponding to the registry service, and if the search result indicates non-existence, determine that the registration fails; and
an informing unit configured to inform the source SWC of the determined registration result.

Specifically, the link execution unit further includes:
an execution condition determination unit configured to determine whether predetermined execution conditions are met, characterized in that the predetermined execution conditions are: the link information of each link registration request stored in the vehicle-mounted memory reaches a predetermined quantity threshold, or receiving the last link registration request exceeds a predetermined time threshold; and
an execution processing unit configured to, when the predetermined execution conditions are met, according to the link information of each link registration request stored in the vehicle-mounted memory, execute the link operations corresponding to all link registration requests, and establish the link relationship between each source SWC and target SWC.

The device further includes:
an SWC information receiving unit configured to receive a request for addition, modification, or deletion of SWC information pushed by the distributed terminal, and perform corresponding addition, modification, or deletion operations in the registry.

Accordingly, another aspect of the present application further provides a system for implementing distributed SWC link processing, including a distributed SWC server and a distributed SWC terminal disposed in a vehicle, characterized in that:
the aforementioned device is disposed in the SWC server; and
the distributed SWC terminal is configured to push a request for addition, modification, or deletion of SWC information to the SWC server, and send a link registration request to the SWC server, the link registration request includes link information of this registration request, and the link information includes: a source SWC identifier and a target SWC identifier.

Implementation of embodiments of the present application has the following beneficial effects:
The present application provides a method, device, and system for implementing distributed SWC link processing. Since distributed SWC terminals and servers are adopted in the vehicle ECU. The SWCs adopt a link registration application mechanism, which restricts the links between SWCs according to the registry. At the same time, the generation of links is "inert" during each link registration request. An actual linking action is only executed collectively upon final confirmation of the links. Hence, this mechanism effectively improves link efficiency between different SWCs, enhances link quality, and reduces unnecessary system performance loss, thereby improving development efficiency and flexibility of complete vehicle software.

### BRIEF DESCRIPTION OF THE DRAWINGS

To more clearly illustrate the technical solutions in the embodiments of the present application or the prior art, the accompanying drawings required for describing the embodiments or the prior art will be briefly introduced below. Obviously, the accompanying drawings in the following description are merely some embodiments of the present application. For those of ordinary skill in the art, other accompanying drawings can still be obtained from these accompanying drawings without creative effort, which shall fall within the scope of the present application.
FIG. 1 is a schematic diagram of a main process of an embodiment of a method for implementing distributed SWC link processing provided by the present application.
FIG. 2 is a more detailed schematic flow diagram of FIG. 1.
FIG. 3 is a schematic structural diagram of an embodiment of a device for implementing distributed SWC link processing provided by the present application.
FIG. 4 is a schematic structural diagram of a service initiation unit in FIG. 3.
FIG. 5 is a schematic structural diagram of a search processing unit in FIG. 3.
FIG. 6 is a schematic structural diagram of a link execution unit in FIG. 3.

### DETAILED DESCRIPTION

To make the objectives, technical solutions, and advantages of the present application clearer, the following will further describe the present application in detail with reference to the accompanying drawings.

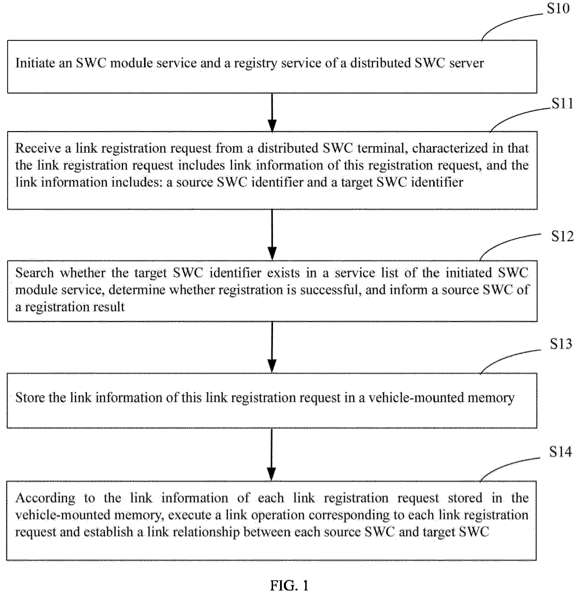

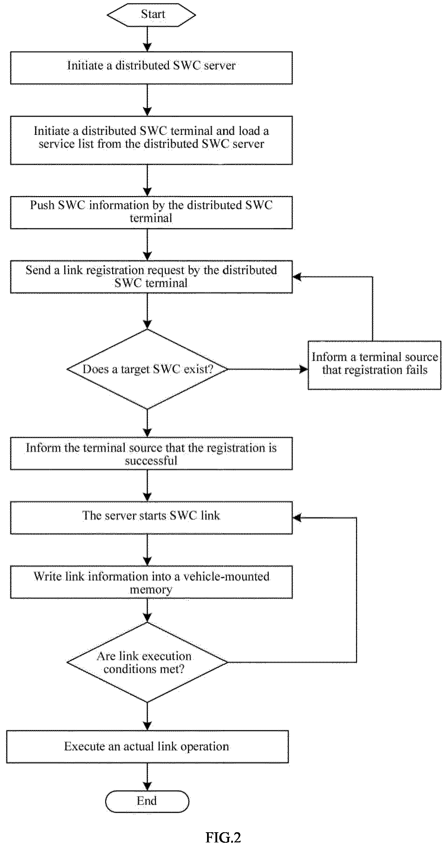

As shown in FIG. 1, a schematic diagram of a main process of an embodiment of a method for implementing distributed SWC link processing provided by the present application is illustrated. Referring to the more detailed flowchart in FIG. 2, in this embodiment, the method is applied to a vehicle including a distributed SWC server and a distributed SWC terminal.

It should be appreciated that, in this embodiment, the distributed SWC server and the distributed SWC terminal are usually arranged in different ECUs of the vehicle. In modern vehicles, there are many different ECUs, each responsible for controlling specific functions or subsystems. The distributed SWC server may be deployed on a dedicated ECU to coordinate and manage communication and connections within the vehicle, while the distributed SWC terminal may be deployed on other ECUs to interact with specific vehicle functions or sensors. This distributed architecture facilitates collaborative work and communication among various components within the vehicle.

More specifically, the method provided by the present application at least includes the following steps:
Step S10: initiating an SWC module service and a registry service of the distributed SWC server;
more specifically, the step S10 further includes:
   initiating the SWC module service and the registry service of the distributed SWC server, and loading service lists of all current SWC module services from a vehicle-mounted memory (such as a non-volatile memory device), as well as registry data corresponding to the registry service.

It should be appreciated that in automobile electronic systems, an SWC module refers to a software unit that controls specific functions or services. Each SWC module is responsible for executing a specific task or providing a function. For example, an automobile may have multiple SWC modules to control different functions, such as an engine control module, air conditioning control module, brake control module, etc. For example, the engine control module is responsible for monitoring and controlling operations of an engine. It receives data from sensors (such as engine temperature, oil pressure, etc.) and adjusts the engine operating states based on this data.

A registry is a data structure used to store configuration and parameter information. In the automobile electronic systems, the registry is used to store various settings, parameters, and configuration information, which may be loaded during system initiation and accessed during runtime.

In this step S10, the distributed server is initiated to load all SWC modules and the corresponding registry data values from a non-volatile memory (such as a flash memory). This ensures that all necessary software components and configuration information can be correctly loaded when the vehicle starts, enabling all vehicle functions to operate normally.

Step S11: receiving a link registration request from the distributed SWC terminal, characterized in that the link registration request includes link information of this registration request, and the link information includes: a source SWC identifier (source _swc) and a target SWC identifier (target_swc); characterized in that, the source SWC is an SWC requesting a link operation, and the target SWC is an SWC being linked;
Step S12: searching whether the target SWC identifier exists in a service list of the initiated SWC module service, determining whether registration is successful, and informing a source SWC of a registration result.

More specifically, in a specific example, the step S12 further includes:
searching whether the target SWC identifier exists in the service list of the initiated SWC module service, if a search result indicates existence, determining that registration is successful, and storing the source SWC identifier and the target SWC identifier in a registry corresponding to the registry service, and if the search result indicates non-existence, determining that the registration fails; and
informing the source SWC of the determined registration result.

Step S13: storing the link information of this link registration request in a vehicle-mounted memory; specifically, storing the source SWC identifier and target SWC identifier from this link registration request in the vehicle-mounted memory, which is recorded as one link registration request, and informing the distributed terminal that this link has been completed.

It should be appreciated that in the method provided by the present application, the linking operation between SWCs needs to meet the following control conditions: The linked target SWC must be included in the SWC module service list of the distributed server. At the same time, both the linked target SWC and the actively linking source SWC need to exist in the registry of the distributed server.

Step S14: according to the link information of each link registration request stored in the vehicle-mounted memory, executing a link operation corresponding to each link registration request and establishing a link relationship between each source SWC and target SWC.

More specifically, in a specific example, the step S14 further includes:
determining whether predetermined execution conditions are met, characterized in that the predetermined execution conditions are: the link information of each link registration request stored in the vehicle-mounted memory reaches a predetermined quantity threshold, or receiving the last link registration request exceeds a predetermined time threshold; and
when the predetermined execution conditions are met, according to the link information of each link registration request stored in the vehicle-mounted memory, executing the link operations corresponding to all link registration requests, and establishing the link relationship between each source SWC and target SWC. The specific execution of the link operations corresponding to all link registration requests can be referred to and combined with the aforementioned introduction.

It should be appreciated that the method of the present application, prior to the step S11, further includes:
receiving a request for addition, modification, or deletion of SWC information pushed by the distributed terminal, and performing corresponding addition, modification, or deletion operations in the registry.

It should be appreciated that the method provided by the present application differs from the traditional centralized "assembly" SWC, where obtaining the latest and most complete SWC information is required for each link. Instead, the present application adopts a distributed technical solution. This solution effectively integrates different terminal SWCs, allowing each terminal SWC to independently submit updates to the distributed SWC server whenever there are changes. As a result, other terminals can access the latest SWC, thereby improving the efficiency of the linking process.

Meanwhile, in the distributed terminals, if there are new SWCs or modifications or deletions to existing SWCs, they are submitted to the distributed SWC server through local push (Push) from the distributed terminals. The SWC module services enabled on the distributed SWC server store the latest SWC information on non-volatile memory devices. These modifications to the SWC can be automatically "aggregated" into the distributed server, effectively avoiding the previous repetitive "assembly" method and significantly improving efficiency.

In the method of the present application, a registry mechanism is employed, enabling SWCs to only "explicitly" actively link to specific SWCs, thereby avoiding incorrect link targets and improving link quality.

In the method of the present application, by adopting an "inert" link approach, when the SWC completes the final full linking, a true single link operation is uniformly executed based on the data stored in the non-volatile memory devices, thereby effectively reducing unnecessary system resource overhead.

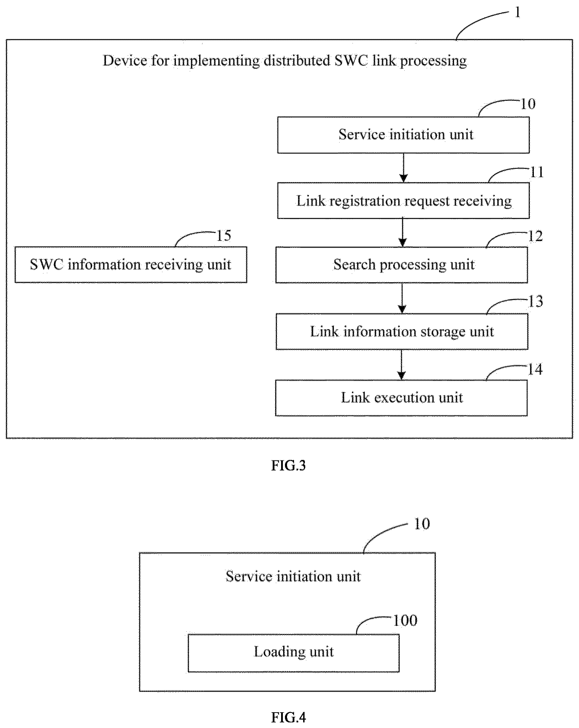

As shown in FIG. 3, a schematic structural diagram of an embodiment of a device for implementing distributed SWC linking provided by the present application is illustrated. With reference to FIG.s 4 to 6, in this embodiment, the device 1 at least includes:
a service initiation unit 10 configured to initiate an SWC module service and a registry service of a distributed SWC server;
a link registration request receiving unit 11 configured to receive a link registration request from a distributed SWC terminal, characterized in that the link registration request includes link information of this registration request, and the link information includes: a source SWC identifier and a target SWC identifier;
a search processing unit 12 configured to search whether the target SWC identifier exists in a service list of the initiated SWC module service, determine whether registration is successful, and inform a source SWC of a registration result;
a link information storage unit 13 configured to store the link information of this link registration request in a vehicle-mounted memory;
a link execution unit 14 configured to, according to the link information of each link registration request stored in the vehicle-mounted memory, execute a link operation corresponding to each link registration request and establish a link relationship between each source SWC and target SWC; and
an SWC information receiving unit 15 configured to receive a request for addition, modification, or deletion of SWC information pushed by the distributed terminal, and perform corresponding addition, modification, or deletion operations in the registry.

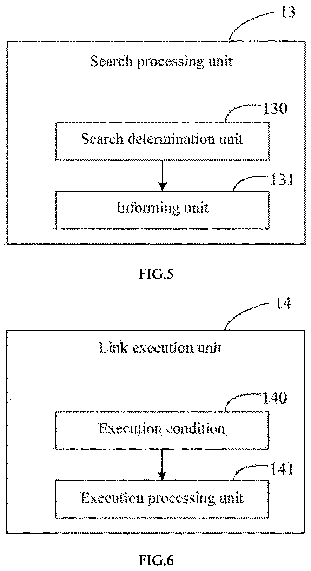

As shown in FIG. 4, in a specific example, the service initiation unit 10 further includes:
a loading unit 100 configured to, when initiating the SWC module service and the registry service of the distributed SWC server, load the service lists of all current SWC module services from the vehicle-mounted memory, as well as registry data corresponding to the registry service;
As shown in FIG. 5, in a specific example, the search processing unit 13 further includes:
   a search determination unit 130 configured to search whether the target SWC identifier exists in the service list of the initiated SWC module service, if a search result indicates existence, determine that registration is successful, and store the source SWC identifier and the target SWC identifier in a registry corresponding to the registry service, and if the search result indicates non-existence, determine that the registration fails; and
   an informing unit 131 configured to inform the source SWC of the determined registration result.

As shown in FIG. 6, in a specific example, the link execution unit 14 further includes:
an execution condition determination unit 140 configured to determine whether predetermined execution conditions are met, characterized in that the predetermined execution conditions are: the link information of each link registration request stored in the vehicle-mounted memory reaches a predetermined quantity threshold, or receiving the last link registration request exceeds a predetermined time threshold; and
an execution processing unit 141 configured to, when the predetermined execution conditions are met, according to the link information of each link registration request stored in the vehicle-mounted memory, execute the link operations corresponding to all link registration requests, and establish the link relationship between each source SWC and target SWC.

For more details, please refer to and combine the aforementioned descriptions of FIG. 1 to FIG. 2, which will not be repeated here.

As yet another aspect of the present application, a system for implementing distributed SWC link processing is further provided, including a distributed SWC server and a distributed SWC terminal disposed in a vehicle, characterized in that:
The device as described in FIG. 3 to FIG. 6 is disposed in the SWC server; for more details, please refer to and combine the descriptions of FIG. 3 to FIG. 6 mentioned above, which will not be reiterated here.

The distributed SWC terminal is configured to push a request for addition, modification, or deletion of SWC information to the SWC server, and send a link registration request to the SWC server, the link registration request includes link information of this registration request, and the link information includes: a source SWC identifier and a target SWC identifier.

Implementation of the embodiments of the present application has the following beneficial effects:
The present application provides a method, device, and system for implementing distributed SWC link processing. Since distributed SWC terminals and servers are adopted in the vehicle ECU. The SWCs adopt a link registration application mechanism, which restricts the links between SWCs according to the registry. At the same time, the generation of links is "inert" during each link registration request. An actual linking action is only executed collectively upon final confirmation of the links. Hence, this mechanism effectively improves link efficiency between different SWCs, enhances link quality, and reduces unnecessary system performance loss, thereby improving development efficiency and flexibility of complete vehicle software.

Those skilled in the art should understand that the embodiments of the present application can be provided as a method, a device, or a computer program product. Therefore, the present application may adopt the form of a complete hardware embodiment, a complete software embodiment, or an embodiment combining both software and hardware aspects. Moreover, the present application may take the form of a computer program product implemented on one or more computer-usable storage media (including but not limited to disk storage, CD-ROM, optical storage, etc.) containing computer-usable program code.

The present application is described with reference to the flowchart and/or block diagram of the method, device (system), and computer program product according to embodiments of the present application. It should be understood that each process and/or block in the flowchart and/or block diagram, as well as combinations of processes and/or blocks in the flowchart and/or block diagram, can be implemented by computer program instructions. These computer program instructions may be provided to a processor of a general-purpose computer, special-purpose computer, embedded processor, or other programmable data processing device to produce a machine, such that the instructions executed by the processor of the computer or other programmable data processing device create device for implementing the functions specified in one or more flows of the flowchart and/or one or more blocks of the block diagram.

The above disclosure is merely one preferred embodiment of the present application and certainly cannot be used to limit the scope of the claims of the present application. Therefore, equivalent variations made in accordance with the claims of the present application shall still fall within the scope covered by the present application.

## Claims

1. A method for implementing distributed software component (SWC) link processing, applied to a vehicle comprising a distributed SWC server and a distributed SWC terminal, **characterized by** at least comprising the following steps:
initiating an SWC module service and a registry service of the distributed SWC server;
receiving a link registration request from the distributed SWC terminal, **characterized in that** the link registration request comprises link information of this registration request, and the link information comprises: a source SWC identifier and a target SWC identifier;
searching whether the target SWC identifier exists in a service list of the initiated SWC module service, determining whether registration is successful, and informing a source SWC of a registration result;
storing the link information of this link registration request in a vehicle-mounted memory; and
according to the link information of each link registration request stored in the vehicle-mounted memory, executing a link operation corresponding to each link registration request and establishing a link relationship between each source SWC and target SWC.

2. The method according to claim 1, wherein initiating an SWC module service and a registry service of the distributed SWC server further comprises:
initiating the SWC module service and the registry service of the distributed SWC server, and loading the service lists of all current SWC module services from the vehicle-mounted memory, as well as registry data corresponding to the registry service.

3. The method according to claim 2, wherein searching whether the target SWC identifier exists in a service list of the initiated SWC module service, determining whether registration is successful, and informing a source SWC of a registration result further comprise:
searching whether the target SWC identifier exists in the service list of the initiated SWC module service, if a search result indicates existence, determining that registration is successful, and storing the source SWC identifier and the target SWC identifier in a registry corresponding to the registry service, and if the search result indicates non-existence, determining that the registration fails; and
informing the source SWC of the determined registration result.

4. The method according to claim 3, wherein storing the link information of this link registration request in a vehicle-mounted memory further comprises:
storing the source SWC identifier and the target SWC identifier in this link registration request in the vehicle-mounted memory, recording the same as the link registration request, and informing the distributed terminal that this link has been completed.

5. The method according to claim 4, wherein according to the link information of each link registration request stored in the vehicle-mounted memory, executing a link operation corresponding to each link registration request and establishing a link relationship between each source SWC and target SWC further comprise:
determining whether predetermined execution conditions are met, wherein the predetermined execution conditions are: the link information of each link registration request stored in the vehicle-mounted memory reaches a predetermined quantity threshold, or receiving the last link registration request exceeds a predetermined time threshold; and
when the predetermined execution conditions are met, according to the link information of each link registration request stored in the vehicle-mounted memory, executing the link operations corresponding to all link registration requests, and establishing the link relationship between each source SWC and target SWC.

6. The method according to any one of claims 1 to 5, further comprising:
receiving a request for addition, modification, or deletion of SWC information pushed by the distributed terminal, and performing corresponding addition, modification, or deletion operations in the registry.

7. A device for implementing distributed SWC link processing, **characterized by** at least comprising:
a service initiation unit configured to initiate an SWC module service and a registry service of a distributed SWC server;
a link registration request receiving unit configured to receive a link registration request from a distributed SWC terminal, **characterized in that** the link registration request comprises link information of this registration request, and the link information comprises: a source SWC identifier and a target SWC identifier;
a search processing unit configured to search whether the target SWC identifier exists in a service list of the initiated SWC module service, determine whether registration is successful, and inform a source SWC of a registration result;
a link information storage unit configured to store the link information of this link registration request in a vehicle-mounted memory; and
a link execution unit configured to, according to the link information of each link registration request stored in the vehicle-mounted memory, execute a link operation corresponding to each link registration request and establish a link relationship between each source SWC and target SWC.

8. The device according to claim 7, wherein:
the service initiation unit further comprises: a loading unit configured to, when initiating the SWC module service and the registry service of the distributed SWC server, load the service lists of all current SWC module services from the vehicle-mounted memory, as well as registry data corresponding to the registry service; and
the search processing unit further comprises:
a search determination unit configured to search whether the target SWC identifier exists in the service list of the initiated SWC module service, if a search result indicates existence, determine that registration is successful, and store the source SWC identifier and the target SWC identifier in a registry corresponding to the registry service, and if the search result indicates non-existence, determine that the registration fails; and
an informing unit configured to inform the source SWC of the determined registration result.

9. The device according to claim 8, wherein the link execution unit further comprises:
an execution condition determination unit configured to determine whether predetermined execution conditions are met, **characterized in that** the predetermined execution conditions are: the link information of each link registration request stored in the vehicle-mounted memory reaches a predetermined quantity threshold, or receiving the last link registration request exceeds a predetermined time threshold; and
an execution processing unit configured to, when the predetermined execution conditions are met, according to the link information of each link registration request stored in the vehicle-mounted memory, execute the link operations corresponding to all link registration requests, and establish the link relationship between each source SWC and target SWC.

10. The device according to any one of claims 7 to 9, further comprising:
an SWC information receiving unit configured to receive a request for addition, modification, or deletion of SWC information pushed by the distributed terminal, and perform corresponding addition, modification, or deletion operations in the registry.

11. A system for implementing distributed SWC link processing, **characterized by** comprising a distributed SWC server and a distributed SWC terminal disposed in a vehicle, wherein:
the device according to any one of claims 7-10 is disposed in the SWC server; and
the distributed SWC terminal is configured to push a request for addition, modification, or deletion of SWC information to the SWC server, and send a link registration request to the SWC server, the link registration request comprises link information of this registration request, and the link information comprises: a source SWC identifier and a target SWC identifier.
